# EUROPEAN PATENT SPECIFICATION

(11) **EP 3 380 557 B1**
(45) Date of publication and mention of the grant of the patent: **16.10.2019**
(21) Application number: 16793870.3
(22) Date of filing: 08.11.2016
(51) Int. Cl.: C08L 23/06, C08F 210/02, C08F 10/02, C08J 5/18, C08L 23/08

(54) **BLOWN POLYOLEFIN FILMS**
GEBLASENE POLYOLEFINFOLIEN
FILMS DE POLYOLÉFINE SOUFFLÉE

(30) Priority: 24.11.2015 EP 15195966
(43) Date of publication of application: 03.10.2018
(73) Proprietor: Basell Polyolefine GmbH, 50389 Wesseling (DE)
(72) Inventor: GRAZZI, Michele, 44122 Ferrara (IT); CAVALIERI, Claudio, 44122 Ferrara (IT)
(74) Representative: Gaverini, Gaetano Luigi Attilio
(86) International application number: PCT/EP2016/077018
(87) International publication number: WO 2017/089124

(56) References cited:
- US-A- 4 144 214

## Description

### FIELD OF THE INVENTION

The present disclosure provides a blown film obtained from a polyolefin composition comprising a polyethylene having a density of 0.920-0.940 g/cm³ and an ethylene copolymer.

### BACKGROUND OF THE INVENTION

The blown films sector constitutes an area of ever-increasing importance in various application segments, such as industry packaging, consumer packaging, bags and sacks.

One of the reasons for this is that the films obtained by blowing have a tubular shape which makes them particularly advantageous in the production of bags for a wide variety of uses (bags for urban refuse, bags used in the storage of industrial materials, for frozen foods, carrier bags, etc.) as the tubular structure enables the number of welding joints required for formation of the bag to be reduced when compared with the use of flat films, with consequent simplification of the process. Moreover, the versatility of the blown-film technique makes it possible, simply by varying the air-insufflation parameters, to obtain tubular films of various sizes, therefore avoiding having to trim the films down to the appropriate size as is necessary in the technique of extrusion through a flat head.

Blown film orientation, which is a parameter for mechanical performance, can be balanced between film extrusion and film cross directions by the correct choice of processing parameters such as blow-up ratio, draw-down ratio, air cooling intensity and distribution and extrusion speed. This comes in combination with the use of low fluidity materials to provide film mechanical performance compared to the cast film process; in fact, cast films are based on high fluidity, low molecular weight thermoplastic resins and are usually strongly oriented in machine direction, which is the reason for mechanical weakness such as easy tear propagation in the extrusion direction.

In addition, blown films have homogeneous mechanical properties in cross direction in contrast to cast films, the mechanical performance of which is not constant over the web width due to melt distribution and temperature variations resulting from film extrusion through a flat die.

The blown film gauge variation in transverse direction may be distributed and equalized with the help of reversing haul-off devices, which enables the production of perfectly cylindrical reels without the occurrence of "piston rings"; on the other hand, in the case of the cast film process, for instance, due to linear film movement resulting from film extrusion making use of a flat die, gauge variations cannot be distributed on wide distances but are slightly shifted left and right by a tiny transversal oscillation of the winding device, which may lead to reels of films with an imperfect shape.

Also in the case of cast films, good reel quality and acceptable film properties in the transverse direction can be achieved only by trimming the edge beads from the flat film; the edge trim material is either discarded or recycled, which comes at a cost, or re-fed into the extrusion process, which adds complexity to the cast film process and may also generate quality problems due to multiple pass of thermoplastic resins through the extruder. In addition, edge trim refeeding is more complicated in the case of multi-layered films due to the choice of the film layer in which the edge trim material is added. In the case of multilayered barrier films which contain one or more non-polyolefinic resin such a polyamide, EVOH or so called tie layer material, edge trim is usually discarded since it cannot be refed or recycled due to quality considerations, which is an additional cost burden related to the cast film process. On the other hand, blown films exhibit constant properties and film thickness in transverse direction and therefore do not require edge trimming, which saves cost, material and avoids technical complications such as edge trim refeeding and associated quality issues.

Known thermoplastic resins used in the production of blown films belong to the polyethylene family of products, such as LDPE, LLDPE, MDPE or HDPE, or mixtures therefrom, since these polyethylene resins are endowed with properties in the molten state which enable films to be obtained with a high level of production efficiency and in a very wide range of thicknesses, without compromising the stability of the bubble.

An improvement in physical properties, however, may be desired.

In particular, it has now been found that by using a composition comprising a polyethylene component having a density of 0.920-0.940 g/cm³ and a specific ethylene copolymer, it is possible to obtain blown films having improved tensile properties, in particular a high elongation at break.

### SUMMARY OF THE INVENTION

The present disclosure provides a blown film comprising a polyolefin composition (I) comprising:
A) from 40 to 75 weight percent ("wt.%"), preferably from 55 to 75 wt.% of a polyethylene having a density of 0.920-0.940 g/cm³ and a fraction soluble in xylene (XS_{A}) of less than 10 wt.%, said polyethylene comprising ethylene and one or more comonomers selected from α-olefins having formula CH₂=CHR, wherein R is an alkyl radical, linear or branched, having from 1 to 10 carbon atoms; and
B) from 25 to 60 wt.%, preferably from 25 to 45 wt.% of a copolymer of ethylene with one or more comonomers selected from α-olefins having formula HC₂=CHR^{I}, where R^{I} is an alkyl radical, linear or branched, having from 1 to 8 carbon atoms, comprising from 50 to 70 wt.% of ethylene and having a fraction soluble in xylene (XS_{B}) of at least 50 wt.%.

Component B) is more soluble in xylene, thus less crystalline, than component A).

The blown film can be mono- or multilayer.

### DETAILED DESCRIPTION OF THE INVENTION

Definitions and test methods.

In the present description, "room temperature" means a temperature of about 25°C.

Solubility in xylene (XS) was determined by the following procedure: 2.5 g of polymer and 250 ml of xylene were introduced in a glass flask equipped with a refrigerator and a magnetic stirrer. The temperature was raised in 30 minutes up to the boiling point of the solvent. The so obtained clear solution was kept under reflux and stirring for further 30 minutes. The closed flask was then left to reach 100°C (heating switched off) and then it was placed in a thermostatic water bath at 25°C for 30 minutes. The solid formed was filtered on quick filtering paper. 100 ml of the filtered liquid was poured in a previously weighed aluminium container, which was heated on a heating plate under nitrogen flow to remove the solvent by evaporation. The container was then kept in an oven at 80°C under vacuum until constant weight was obtained. The weight percentage of polymer soluble in xylene at room temperature was then calculated.

Density was determined according to ISO 1183 at 23°C.

Unless otherwise noted, Melt Flow Rate (MFR) was determined according to ISO 1133 at 230°C with a load of 2.16 kg.

Melting temperature was determined by differential scanning calorimetry (DSC) according to ISO 11357-3. A sample weighting 6 ± 1 mg was heated to 200 ± 1° C at a rate of 20 °C/min and kept at 200 ± 1° C for 2 minutes in nitrogen stream and was then cooled at a rate of 20° C/min to 40 ± 2° C, thereby kept at this temperature for 2 min to crystallize the sample. Then, the sample was again melted at a temperature rise rate of 20° C/min up to 200° C ± 1. The melting scan was recorded, a thermogram was obtained, and, from this, temperatures corresponding to peaks were read. The temperature corresponding to the most intense melting peak recorded during the second fusion was taken as the melting temperature.

Intrinsic Viscosity (I.V.) was determined in tetrahydronaphthalene at 135°C. The sample was dissolved in tetrahydronaphthalene at 135 °C, then was poured into the capillary viscometer. The viscometer tube (Ubbelohde type) was surrounded by a cylindrical glass jacket; this setup allowed a temperature control with a circulating thermostated liquid. The downward passage of the meniscus was timed by a photoelectric device. The passage of the meniscus in front of the upper lamp started the counter which had a quartz crystal oscillator. The meniscus stopped the counter as it passed the lower lamp and the efflux time was registered. This efflux time was converted into a value of intrinsic viscosity through Huggins' equation (Huggins, M.L., J. Am. Chem. Soc., 1942, 64, 2716) by knowing the flow time of the pure solvent at the same experimental conditions (same viscometer and same temperature). One single polymer solution was used to determine the I.V. [η].

Propylene and butene-1 contents were determined by IR spectroscopy.

The following measurements were used to calculate the propylene content:
a) Area (ANIR) of the combination absorption bands between 4482 and 3950 cm⁻¹ which was used for spectrometric normalization of film thickness.
b) Area (A971) of the absorption band due to propylene sequences in the range 986-952 cm⁻¹, omitting area beneath a baseline drawn between the endpoints.

The ratio A971/ANIR was calibrated by analyzing copolymers of known compositions, determined by NMR spectroscopy.

The following measurements were used to calculate the 1-butene content:

Area (ANIR) of the combination absorption bands between 4482 and 3950 cm⁻¹ which was used for spectrometric normalization of sample thickness.

Area (Ac4) of the absorption band due to ethyl branches from 1-butene propylene sequences in the range 781-750 cm⁻¹, omitting the area beneath a baseline drawn between the endpoints.

The ratio Ac4/ANIR was calibrated by analyzing copolymers of known compositions, determined by NMR spectroscopy.

Flexural Modulus: ISO 178, measured on 4 mm compression molded sheets 24 hours after molding. Compression molded specimens were prepared according to ISO 293 and ISO 1872-2.

Tensile strength and elongation at yield: (ISO 527-3; 50 mm/min), measured on 4 mm injection molded specimens 24 hours after injection.

Tensile strength at and elongation at break: (ISO 527-3; 50 mm/min), measured on 4 mm injection molded specimens 24 hours after injection.

Softening Vicat temperature: (ISO 306) measured on 4 mm injection molded specimens 24 hours after injection.

H.D.T. at 0.455 MPa load: (ISO 75) measured on 4 mm injection molded specimens 24 hours after injection.

The polyethylene component A), having a density of 0.920-0.940 g/cm³, is a copolymer of ethylene with one or more comonomers selected from α-olefins having formula CH₂=CHR, wherein R is an alkyl radical, linear or branched, having from 1 to 10 carbon atoms. Examples of said α-olefins are propylene, butene-1, pentene-1, 4-methylpentene-1, hexene-1, octene-1 and decene-1.

In an embodiment, the polyolefin composition (I) comprises preferably from 60 to 70 wt.% of component A), and from 30 to 40 wt.% of component B).

The total amount of α-olefin comonomer in polyethylene A) is from 4 to 15 wt.%; alternatively from 6 to 12 wt.%.

The α-olefin comonomer in polyethylene A) may be propylene or butene-1 or a mixture of propylene and butene-1.

In an embodiment the polyethylene A) comprises from 2 to 5 wt.% of propylene and from 4 to 7 wt.% of butene-1.

The polyethylene component A) has a solubility in xylene (XS_{A}) at 25°C of less than 10 wt.%, alternatively of less than 8 wt.%, in particular from less than 10 to 1 wt.% or from less than 8 to 1 wt.%.

The ethylene copolymer of component B) is a copolymer of ethylene with one or more comonomers selected from α-olefins having formula HC₂=CHR^{I}, where R^{I} is an alkyl radical, linear or branched, having from 1 to 8 carbon atoms.

Examples of said α-olefins are propylene, butene-1, pentene-1, 4-methylpentene-1, hexene-1, octene-1 and decene-1.

In an embodiment, the ethylene copolymer of component B) is a copolymer of ethylene with propylene, in particular it may comprise from 35 to 45 wt.% of propylene and from 55 to 75 wt.% of ethylene.

The ethylene copolymer of component B) has a fraction soluble in xylene (XS_{B}) of at least 50 wt.%, in particular from 50 to 95 wt.% or from 70 to 95 wt.%.

In an embodiment, the intrinsic viscosity [η] of the XS_{B} fraction is of 2 dl/g or more, in particular from 2 to 3.5 dl/g.

The polyolefin composition (I) may have a melting peak at a temperature Tm of 120°C or higher, in particular from 120°C to 130°C, measured by Differential Scanning Calorimetry with a heating rate of 20°C per minute.

The melt flow rate (MFR) of the polyolefin composition (I) may be from 0.3 to 5 g/10 min., alternatively from 0.5 to 3 g/10 min., determined according to ISO 1133 at 230°C with a load of 2.16 kg.

In various embodiments, the polyolefin composition (I) may have at least one of the following additional features:
- a MFR value of the polyethylene component A), determined according to ISO 1133 at 230°C with a load of 2.16 kg, of from 1 to 15 g/10 min.;
- an ethylene content, determined on the total amount of A) + B), of 70 - 95% by weight, alternatively of 75 - 90% by weight;
- an amount of total fraction XS_{TOT} soluble in xylene at 25°C, determined by extraction carried out on the total amount of A) + B), of 20% - 50% by weight, alternatively of 30 - 40% by weight;
- an intrinsic viscosity [η] of the XS_{TOT} fraction of 1.8 dl/g or more, in particular from 1.8 to 3.0 dl/g;
- a flexural modulus value of less than 260 MPa, in particular from 90 to less than 260 MPa, or from 90 to 230 MPa.

In various embodiments, the polyolefin composition (I) may be prepared by a sequential polymerization process, comprising at least two sequential steps, wherein components A) and B) are prepared in separate subsequent steps, by operating in each step, except the first step, in the presence of the polymer formed and the catalyst used in the preceding step. The catalyst is added only in the first step, but its activity is such that it is still active for all the subsequent steps.

The polymerization process, which can be continuous or batch-type, is carried out following known techniques and operating in the liquid phase, in the presence or not of inert diluent, or in the gas phase, or by mixed liquid-gas techniques. It is preferable to carry out the polymerization in the gas phase.

The polymerization temperature may be from 50 to 100 °C. The pressure may be atmospheric or higher.

The regulation of the molecular weight is carried out by using known regulators, hydrogen in particular.

The polymerization may be carried out in the presence of a Ziegler-Natta catalyst. Typically, a Ziegler-Natta catalyst comprises the product of the reaction of an organometallic compound of Group 1, 2 or 13 of the Periodic Table of Elements with a transition metal compound of Groups 4 to 10 of the Periodic Table of Elements (new notation). In particular, the transition metal compound is selected among the compounds of Ti, V, Zr, Cr and Hf, and is preferably supported on active MgCl₂.

Particularly suitable catalysts comprise the product of the reaction of said organometallic compound of Group 1, 2 or 13 of the Periodic Table of Elements, with a solid catalyst component comprising a Ti compound and an electron donor compound supported on active MgCl₂.

Suitable organometallic compounds are the aluminum alkyl compounds.

Thus in an embodiment, the polyolefin composition (I) is obtainable by using a Ziegler-Natta catalyst, preferably a Ziegler-Natta catalyst supported on active MgCl₂, more preferably a Ziegler-Natta catalyst comprising the product of reaction of:
1) a solid catalyst component comprising a Ti compound and an electron donor (internal electron-donor) supported on active MgCl₂;
2) an aluminum alkyl compound (cocatalyst); and, optionally,
3) an electron-donor compound (external electron-donor).

The solid catalyst component (1) contains as electron-donor a compound generally selected among the ethers, ketones, lactones, compounds containing N, P and/or S atoms, and mono- and dicarboxylic acid esters.

Catalysts having the above mentioned characteristics are well known in the patent literature; particularly advantageous are the catalysts described in United States Patent No. 4,399,054 and European Patent No. 45977.

The electron-donor compounds may phthalic acid esters, preferably diisobutyl phthalate, and succinic acid esters.

Employable succinic acid esters are represented by the formula (I): 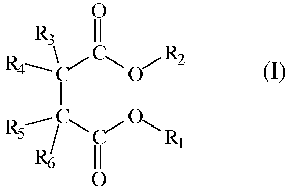 wherein the radicals R₁ and R₂, equal to or different from each other, are a C₁-C₂₀ linear or branched alkyl, alkenyl, cycloalkyl, aryl, arylalkyl or alkylaryl group, optionally containing heteroatoms; the radicals R₃ to R₆ equal to or different from each other, are hydrogen or a C₁-C₂₀ linear or branched alkyl, alkenyl, cycloalkyl, aryl, arylalkyl or alkylaryl group, optionally containing heteroatoms, and the radicals R₃ to R₆ which are joined to the same carbon atom can be linked together to form a cycle.

R₁ and R₂ are preferably C₁-C₈ alkyl, cycloalkyl, aryl, arylalkyl and alkylaryl groups. Particularly preferred are the compounds in which R₁ and R₂ are selected from primary alkyls and in particular branched primary alkyls. Examples of suitable R₁ and R₂ groups are methyl, ethyl, n-propyl, n-butyl, isobutyl, neopentyl, 2-ethylhexyl. Particularly preferred are ethyl, isobutyl, and neopentyl.

One of the preferred groups of compounds described by the formula (I) is that in which R₃ to R₅ are hydrogen and R₆ is a branched alkyl, cycloalkyl, aryl, arylalkyl and alkylaryl radical having from 3 to 10 carbon atoms. Another preferred group of compounds within those of formula (I) is that in which at least two radicals from R₃ to R₆ are different from hydrogen and are selected from C₁-C₂₀ linear or branched alkyl, alkenyl, cycloalkyl, aryl, arylalkyl or alkylaryl group, optionally containing heteroatoms. Particularly preferred are the compounds in which the two radicals different from hydrogen are linked to the same carbon atom. Furthermore, also the compounds in which at least two radicals different from hydrogen are linked to different carbon atoms, that is R₃ and R₅ or R₄ and R₆ are particularly preferred.

Other electron-donors may be the 1,3-diethers, as disclosed in applications EP 0 361 493 B1 and EP 0 728 769 B1.

As cocatalysts (2), one preferably uses the trialkyl aluminum compounds, such as Al-triethyl, Al-triisobutyl and Al-tri-n-butyl.

The electron-donor compounds (3) that can be used as external electron-donors (added to the Al-alkyl compound) comprise the aromatic acid esters (such as alkylic benzoates), heterocyclic compounds (such as the 2,2,6,6-tetramethylpiperidine and the 2,6-diisopropylpiperidine), and in particular silicon compounds containing at least one Si-OR bond (where R is a hydrocarbon radical).

Examples of the said silicon compounds are those of formula R¹ₐR²_{b}Si(OR³)_{c}, where a and b are integer numbers from 0 to 2, c is an integer from 1 to 3 and the sum (a+b+c) is 4; R¹, R² and R³ are alkyl, cycloalkyl or aryl radicals with 1-18 carbon atoms optionally containing heteroatoms.

Specific examples of silicon compounds are (tert-butyl)₂Si(OCH₃)₂, (cyclohexyl)(methyl)Si (OCH₃)₂, (phenyl)₂Si(OCH₃)₂ and (cyclopentyl)₂Si(OCH₃)₂.

The previously said 1,3- diethers may be used as external donors. In the case that the internal donor is one of the said 1,3-diethers, the external donor can be omitted.

The catalysts may be precontacted with small quantities of olefin (prepolymerization) by maintaining the catalyst in suspension in a hydrocarbon solvent, and by polymerizing at temperatures from room temperature to 60°C, thus producing a quantity of polymer from 0.5 to 3 times the weight of the catalyst.

The precontact step can also take place in liquid monomer, producing, in this case, a quantity of polymer up to 1000 times the weight of the catalyst.

The polyolefin composition (I) can also contain additives commonly employed in the art, such as antioxidants, light stabilizers, heat stabilizers, colorants and fillers.

Typical blown film applications include industry packaging (e.g. shrink film, stretch film, stretch hoods, bag film or container liners), consumer packaging (e.g. packaging film for frozen products, shrink film for transport packaging, food wrap film, packaging bags, or form, fill and seal packaging film), laminating film (e.g. laminating of aluminium or paper used for packaging for example milk or coffee), barrier film (e.g. film made of raw materials such as polyamides and EVOH acting as an aroma or oxygen barrier, used for packaging food, e. g. cold meats and cheese), films for the packaging of medical products, agricultural film (e.g. greenhouse film, crop forcing film, silage film, silage stretch film).

The thickness of the present film is generally equal to or lower than 250 µm, preferably equal to or lower than 150 µm, in particular from 20 to 250 µm, or from 20 to 150 µm.

As previously said, the present film can be a monolayer or multilayer film.

In the multilayer films, at least one layer comprises the polyolefin composition (I). In an embodiment at least the base layer (also called "support layer") comprise the polyolefin composition (I).

The polyolefin composition (I) may be present in the blown film in a weight amount of at least 40%, in particular of from 40 to 100%.

The said amounts are with respect to the total weight of the film when it is a monolayer film, or with respect to the total weight of the layer or layers containing the polyolefin composition (I) for multilayer films.

The other layer(s) may comprise other kinds of polymers.

Examples of olefin polymers that can be used for the other layers are polymers or copolymers, and their mixtures, of CH₂=CHR olefins where R is a hydrogen atom or a C₁-C₈ alkyl radical.

Embodiments of such polymers within the scope of the present disclosure are:
- isotactic or mainly isotactic propylene homopolymers, and homopolymers or copolymers of ethylene, like HDPE, LDPE, LLDPE;
- Semi-crystalline copolymers of propylene with ethylene and/or C₄-C₁₀ α-olefins, such as for example butene-1, hexene-1, 4-methyl-1-pentene, octene-1, wherein the total comonomer content ranges from 0.05% to 20% by weight with respect to the weight of the copolymer, or mixtures of said copolymers with isotactic or mainly isotactic propylene homopolymers;
- elastomeric copolymers of ethylene with propylene and/or a C₄-C₁₀ α-olefin, optionally containing minor quantities (in particular, from 1% to 10% by weight) of a diene, such as butadiene, 1,4-hexadiene, 1,5-hexadiene, ethylidene-1-norbornene;
- heterophasic copolymers comprising a propylene homopolymer and/or one of the copolymers of item b), and an elastomeric fraction comprising one or more of the copolymers of item c), that may be prepared according to known methods by mixing the components in the molten state, or by sequential polymerization, and generally containing the said elastomeric fraction in quantities from 5% to 90% by weight;
- butene-1 homopolymers or copolymers with ethylene and/or other α-olefins.

Examples of polymers different from polyolefins, employable for the other layers, are polystyrenes, polyvynylchlorides, polyamides, polyesters and polycarbonates, copolymers of ethylene and vinyl alcohol (EVOH) and "tie layer" resins.

Finally, the present film can undergo a series of subsequent operations, such as surface embossing, by heating the surface and compressing it against an embossing roller; printing, after having made the surface ink sensitive through oxidating (for instance flame) or ionizing treatments (for instance corona discharge treatment); coupling with fabric or film, by heating of the surfaces and compression; coextrusion with other polymeric or metallic materials (e.g. aluminum film); plating treatments (depositing a layer of aluminum through evaporation under vacuum, for example); application of an adhesive layer on one of the two faces of the film, thus producing an adhesive film.

Depending upon the specific kind of film and final treatment, the present film can find many uses, including, without limitation, goods and food packaging.

The present disclosure provides also a blown film process, wherein the polyolefin composition (I) is used to produce at least one layer of the film.

In the said process the following main settings and conditions may apply.

The screw length may be from 20 to 40 times the screw diameter, in particular from 25 to 35 times the screw diameter.

The barrel and die temperatures may be from 160 to 240°C.

The die temperature may be from 200 to 240°C.

Film extrusion may be performed in vertical upward direction.

The blow-up ratio may be from 2.2 to 4, in particular from 2.4 to 3.6.

The die diameter can be any commercial die dimension, from 30 mm to 2 m or higher.

Film cooling may be performed with cooling fluids, which can be either in a liquid or in a gaseous state. In case of cooling with a liquid cooling medium, water is the preferred cooling medium, and the extrusion direction may be vertical downward. In case of cooling with a gaseous cooling medium, air is the preferred cooling medium, although other gases, such as nitrogen, can also be used, and the extrusion direction is preferably vertical upward.

The cooling medium temperature may be from 5 to 20°C, in particular from 10 to 20°C.

The gap of the die ring (annular die gap) may be equal to or less than 3 mm, in particular equal to or less than 1.8 mm.

The extrusion and blowing apparatuses are those well known in the art for film blowing.

### EXAMPLES

The various embodiments, compositions and methods as provided herein are disclosed further below in the following examples. These examples are illustrative only, and are not intended to limit the scope of the appended claims in any manner whatsoever.

### Example 1

### Preparation of the polyolefin composition (I)

The solid catalyst component used in polymerization is a Ziegler-Natta catalyst component supported on magnesium chloride, containing titanium and diisobutylphthalate as internal donor, prepared as follows.

An initial amount of microspheroidal MgCl₂·2.8C₂H₅OH was prepared according to the method described in Example 2 of USP 4,399,054 but operating at 3,000 rpm instead of 10,000. The so obtained adduct was then subjected to thermal dealcoholation at increasing temperatures from 30 to 130°C under nitrogen stream until the molar alcohol content per mol of Mg was 1.16.

Into a 1000 mL four-necked round flask, purged with nitrogen, 500 mL of TiCl₄ were introduced at 0°C. While stirring, 30 grams of the microspheroidal MgCl₂·1.16C₂H₅OH adduct (prepared as described above) were added. The temperature was raised to 120°C and kept at this value for 60 minutes. During the temperature increase, an amount of diisobutylphthalate was added such as to have a Mg/diisobutylphthalate molar ratio of 18. After 60 minutes the stirring was stopped, the liquid siphoned off and the treatment with TiCl₄ was repeated at 100°C for 1 hour in the presence of an amount of diisobutylphthalate such as to have a Mg/ diisobutylphthalate molar ratio of 27. After that time the stirring was stopped, the liquid siphoned off and the treatment with TiCl₄ was repeated at 100°C for 30 min. After sedimentation and siphoning at 85°C the solid was washed six times with anhydrous hexane (6 x 100 ml) at 60°C.

Before introduction into the polymerization reactors, the solid catalyst component described above was contacted at 30°C for 9 minutes with aluminum triethyl (TEAL) and dicyclopentyldimethoxysilane (DCPMS), in a TEAL/DCPMS weight ratio equal to about 15 and in such quantity that the TEAL/solid catalyst component weight ratio was equal to 4.

The catalyst system was then subjected to prepolymerization by maintaining it in suspension in liquid propylene at 50°C for about 75 minutes before introducing it into the first polymerization reactor.

The polymerization was carried out in continuous in a series of two gas-phase reactors equipped with devices to transfer the product from the first reactor to the second one.

Into the first gas phase polymerization reactor a polyethylene with 3.4 wt.% of propylene and 5.2 wt.% of butene-1 (component A) was produced by feeding in a continuous and constant flow the prepolymerized catalyst system, hydrogen (used as molecular weight regulator), ethylene and butene-1, each in the gas state.

The polyethylene formed in the first reactor was continuously discharged and, after having been purged of unreacted monomers, was introduced, in a continuous flow, into the second gas phase reactor, together with quantitatively constant flows of hydrogen, ethylene and propylene in the gas state.

In the second reactor a copolymer of ethylene with propylene comprising 40 wt.% of propylene was produced (component B). Polymerization conditions, molar ratio of the reactants and composition of the copolymers obtained are shown in Table I.

The polymer particles exiting the second reactor, which constitute the not-yet stabilized polyolefin composition, were subjected to a steam treatment to remove the reactive monomers and volatile substances, and then dried.

Then the polyolefin composition was mixed with a stabilizing additive composition in a twin screw extruder Berstorff ZE 25 (length/diameter ratio of screws: 33) and extruded under nitrogen atmosphere in the following conditions:

| | |
|---|---|
| Rotation speed: | 250 rpm; |
| Extruder output: | 15 kg/hour; |
| Melt temperature: | 280-290 °C |

From the extruder it was discharged a stabilized polyolefin composition comprising the following additives:
- 0.1% by weight of Irganox® 1010;
- 0.1% by weight of Irgafos® 168;
- 0.04% by weight of DHT-4A (hydrotalcite).

Irganox® 1010 is und 2,2-bis[3-[,5-bis(1,1-dimethylethyl)-4-hydroxyphenyl)-1-oxopropoxy]methyl]-1,3-propanediyl-3,5-bis(1,1-dimethylethyl)-4-hydroxybenzene-propanoate, while Irgafos® 168 is tris(2,4-di-tert.-butylphenyl)phosphite.

The percent amounts are referred to the total weight of the polyolefin composition and stabilizing additive composition.

The properties of the present polyolefin composition (I), reported in Table II, were obtained from measurements carried out on the composition discharged from the extruder.

**Table I**

| Example No. | | 1 |
|---|---|---|
| **1^{st} Reactor (component A)** | | |
| Temperature | °C | 75 |
| Pressure | barg | 20 |
| H2/C2- | mol. | 0.54 |
| C2-/(C2- + C3-) | mol. | 0.98 |
| C4-/(C4- + C2-) | mol. | 0.058 |
| Split | wt% | 65 |
| Xylene soluble (XS_{A}) | wt% | 5.2 |
| MFR of A) | g/10 min. | 7.3 |
| Density of A) | g/cm³ | 0.930 |
| C3- content of A) | wt% | 3.4 |
| C4- content of A) | wt% | 5.3 |

| **2^{nd} Reactor (component B)** | | |
|---|---|---|
| Temperature | °C | 65 |
| Pressure | barg | 20 |
| H2/C2- | mol. | 0.19 |
| H2/C3- | mol. | 0.15 |
| C2-/(C2- + C3-) | mol. | 0.45 |
| Split | wt% | 35 |
| C3- content of B) ^{∗} | wt% | 40 |
| Xylene soluble of B) ^{∗} (XS_{B}) | wt% | 90 |
| C3- content of A + B) | wt% | 14.5 |
| Xylene soluble of A+B) (XS) | wt% | 34.0 |
| Intrinsic Viscosity of A + B XSIV | dl/g | 2.55 |
| Tm of A) + B) | °C | 123.7 |
| ΔHm of A) + B) | J/gr | 87.4 |

| | | |
|---|---|---|
| Notes: C3- = propylene; C2- = ethylene; C4- = butene-1; split = amount of polymer produced in the concerned reactor. ^{∗}Calculated values | | |

**Table II**

| Example | | Ex. 1 |
|---|---|---|
| Density | g/cm³ | 0.9055 |
| MFR | g/10 min. | 2.0 |
| Flexural Modulus | MPa | 210 |
| Tensile Strength at Yield | MPa | 6.5 |
| Elongation at Yield | % | 32.8 |
| Tensile strength at break | MPa | 9.4 |
| Elongation at break | % | 550 |
| Vicat | °C | 78.8 |
| HdT (@ 0.455 MPa) | °C | 38.9 |

| | | |
|---|---|---|
| MD = Machine DirectionTD = Transverse Direction | | |

Three layer films were prepared on a Collin three layer coextrusion line. The film of Example 1 was prepared by using the polyolefin composition (I) for all the three layers.

In Comparison Example 1 the polymer material used for the all the three layers was a low density polyethylene having a density of 0.927 g/cm³ and a MFR of 0.25 g/10 min., measured according to ISO 1133 at 190°C with a load of 2.16 kg.

Such low density polyethylene is sold by LyondellBasell with trademark Lupolen 3010 D.

In the said Collin coextrusion line, the screw length / screw diameter ratios were 30 mm /30 xD for extruders A & C while 45 mm / 30xD for the B one. No IBCS system (Internal Bubble Cooling System) was used. During the extrusion trials, the melt was extruded through an annular die with a diameter of 100 mm and a quite narrow gap (0.8 mm for the trials). At the exit from the die, the melt tube was subjected to intensive air cooling, immediately blown up to about three times the diameter of the die and stretched in the direction of the flow.

The main operating conditions were:
- Barrel temperature: 200-210-220-220-220°C;
- Adaptor temperature: 220°C;
- Die temperature: 220-220-220-220-215°C;
- Blow-up ratio: 3.1;
- Total throughput 13-15 kg/h.

The final film thickness of the films was approximately 100 micron, with a thickness distribution (in percentage) of 20/60/20.

The properties of the so obtained films are reported in Table III.

**Table III**

| Example | | Ex. 1 | Comp. 1 |
|---|---|---|---|
| Tensile Strength at Yield (MD) | MPa | 8.4 | 13.1 |
| Elongation at Yield (MD) | % | 30.8 | 19.1 |
| Tensile strength at break (MD) | MPa | 21.2 | 26.7 |
| Elongation at break (MD) | % | 1362 | 935 |

In various embodiments, the polyolefin composition (I) of the present disclosure has a flexural modulus ranging from 90 MPa to less than 260 MPa; alternatively from 90 MPa to 230 MPa. In various embodiments, the polyolefin composition (I) of the present disclosure has a density ranging from 0.890 g/cm³ to 0.930 g/cm³; alternatively from 0.895 g/cm³ to 0.920 g/cm³. In various embodiments, the polyolefin composition (I) of the present disclosure has a melt flow rate ranging from 1 g/10 min. to 10 g/10 min.; alternatively from 1 g/10 min. to 5 g/10 min. In various embodiments, the polyolefin composition (I) of the present disclosure has a tensile strength at yield ranging from 2 MPa to 10 MPa; alternatively from 3 MPa to 9 MPa. In various embodiments, the polyolefin composition (I) of the present disclosure has a elongation at yield ranging from 20% to 40%; alternatively from 30% to 35%. In various embodiments, the polyolefin composition (I) of the present disclosure has a tensile strength at break ranging from 5 MPa to 15 MPa; alternatively from 6 MPa to 13 MPa. In various embodiments, the polyolefin composition (I) of the present disclosure has a elongation at break ranging from 300% to 1000%; alternatively from 400% to 800%. In various embodiments, the polyolefin composition (I) of the present disclosure has a Vicat ranging from 65 °C to 100 °C; alternatively from 70 °C to 90 °C. In various embodiments, the polyolefin composition (I) of the present disclosure has a HdT at 0.455 MPa ranging from 30 °C to 50 °C; alternatively from 35 °C to 45 °C.

In various embodiments, the blown film of the present disclosure has a tensile strength at yield (MD) ranging from 3 MPa to 20 MPa; alternatively from 5 MPa to 15 MPa. In various embodiments, the blown film of the present disclosure has a elongation at yield (MD) ranging from 20% to 40%; alternatively from 30% to 35%. In various embodiments, the blown film of the present disclosure has a tensile strength at break (MD) ranging from 10 MPa to 40 MPa; alternatively from 15 MPa to 30 MPa. In various embodiments, the blown film of the present disclosure has a elongation at break (MD) ranging from 500% to 2500%; alternatively from 800% to 2000%.

## Claims

1. A blown film comprising a polyolefin composition (I) comprising:
A) from 40 to 75 wt.%, preferably from 55 to 75 wt.%, of a polyethylene having a density of 0.920 to 0.940 g/cm³ and a fraction soluble in xylene (XS_{A}) of less than 10 wt.%, said polyethylene comprising ethylene and one or more comonomers selected from α-olefins having formula CH₂=CHR, wherein R is an alkyl radical, linear or branched, having from 1 to 10 carbon atoms; and
B) from 25 to 60 wt.%, preferably from 25 to 45 wt.%, of a copolymer of ethylene with one or more comonomers selected from α-olefins having formula HC₂=CHR^{I}, where R^{I} is an alkyl radical, linear or branched, having from 1 to 8 carbon atoms, comprising from 50 to 70 wt.% of ethylene and having a fraction soluble in xylene (XS_{B}) of at least 50 wt.%.

2. The blown film of claim 1, in form of a mono- or multilayer film.

3. The blown film of claims 1 and 2, having thickness equal to or lower than 250 µm.

4. The blown film of claim 1, wherein the composition (I) has a flexural modulus of less than 260 MPa as measured according to ISO 178.

5. The blown film of claim 1, wherein polyethylene component A) has a solubility in xylene (XS_{A}) at 25°C of less than 8 wt.%.

6. The blown film of claim 1, wherein the ethylene copolymer of component B) comprises from 35 to 45 wt.% of propylene.

7. The blown film of claim 1, wherein the ethylene copolymer of component B) has a fraction soluble in xylene (XS_{B}) of from 70 to 95wt.%.

8. Goods and food packaging comprising the blown film of claim 1.

9. A blown film process, wherein the polyolefin composition (I) of claim 1 is used to produce at least one film layer.

10. The process of claim 9, carried out under the following conditions:
- screw length from 20 to 40 times the screw diameter;
- barrel and die temperatures from 160 to 240°C;
- annular die gap equal to or less than 3 mm;
- blow-up ratio from 2.2 to 4.

## Patentansprüche

1. Blasfolie, umfassend eine Polyolefinzusammensetzung (I), umfassend:
A) 40 bis 75 Gew.%, vorzugsweise 55 bis 75 Gew.%, eines Polyethylens mit einer Dichte von 0,920 bis 0,940 g/cm³ und einer in Xylol löslichen Fraktion (XS_{A}) von weniger als 10 Gew.%, wobei das Polyethylen Ethylen und ein oder mehrere Comonomere ausgewählt aus α-Olefinen mit der Formel CH₂=CHR umfasst, wobei R ein linearer oder verzweigter Alkylrest mit 1 bis 10 Kohlenstoffatomen ist; und
B) 25 bis 60 Gew.%, vorzugsweise 25 bis 45 Gew.% eines Copolymers von Ethylen mit einem oder mehreren Comonomeren ausgewählt aus α-Olefinen mit der Formel HC₂=CHR^{I}, wobei R^{I} ein linearer oder verzweigter Alkylrest mit 1 bis 8 Kohlenstoffatomen ist, das 50 bis 70 Gew.% Ethylen umfasst und eine in Xylol lösliche Fraktion (XS_{B}) von mindestens 50 Gew.% aufweist.

2. Blasfolie nach Anspruch 1 in Form einer Mono- oder Mehrschichtfolie.

3. Blasfolie nach Anspruch 1 und 2 mit einer Dicke gleich oder niedriger als 250 µm.

4. Blasfolie nach Anspruch 1, wobei die Zusammensetzung (I) einen Biegemodul niedriger als 260 MPa aufweist, gemessen gemäß ISO 178.

5. Blasfolie nach Anspruch 1, wobei Polyethylenkomponente A) eine Löslichkeit in Xylol (XS_{A}) bei 25 °C von weniger als 8 Gew.% aufweist.

6. Blasfolie nach Anspruch 1, wobei das Ethylencopolymer von Komponente B) 35 bis 45 Gew.% Propylen aufweist.

7. Blasfolie nach Anspruch 1, wobei das Ethylencopolymer von Komponente B) eine in Xylol lösliche Fraktion (XS_{B}) von 70 bis 95 Gew.% aufweist.

8. Waren und Nahrungsmittelverpackung, umfassend die Blasfolie gemäß Anspruch 1.

9. Blasfolienverfahren, wobei die Polyolefinzusammensetzung (I) gemäß Anspruch 1 verwendet wird, um mindestens eine Folienschicht zu produzieren.

10. Verfahren nach Anspruch 9, das unter den folgenden Bedingungen durchgeführt wird:
- Schneckenlänge entspricht dem 20- bis 40-fachen des Schneckendurchmessers;
- Zylinder- und Düsentemperaturen von 160 bis 240 °C;
- Ringdüsenspalt gleich oder kleiner als 3 mm;
- Aufblasverhältnis von 2,2 bis 4.

## Revendications

1. Film soufflé comprenant une composition de polyoléfine (I) comprenant :
A) 40 à 75% en poids, préférablement 55 à 75% en poids, d'un polyéthylène possédant une densité de 0,920 à 0,940 g/cm³ et une fraction soluble dans le xylène (XS_{A}) inférieure à 10% en poids, ledit polyéthylène comprenant de l'éthylène et un ou plusieurs comonomères choisis parmi les α-oléfines possédant la formule CH₂=CHR, R représentant un radical alkyle, linéaire ou ramifié, possédant 1 à 10 atomes de carbone ; et
B) 25 à 60% en poids, préférablement 25 à 45% en poids, d'un copolymère d'éthylène avec un ou plusieurs comonomères choisis parmi les α-oléfines possédant la formule HC₂=CHR¹, R¹ représentant un radical alkyle, linéaire ou ramifié, possédant 1 à 8 atomes de carbone, comprenant 50 à 70% en poids d'éthylène et possédant une fraction soluble dans le xylène (XS_{B}) d'au moins 50% en poids.

2. Film soufflé selon la revendication 1, sous la forme d'un film monocouche ou multicouche.

3. Film soufflé selon les revendications 1 et 2, possédant une épaisseur égale ou inférieure à 250 µm.

4. Film soufflé selon la revendication 1, la composition (I) possédant un module de flexion inférieur à 260 MPa tel que mesuré selon la norme ISO 178.

5. Film soufflé selon la revendication 1, le constituant à base de polyéthylène A) présentant une solubilité dans le xylène (XS_{A}) à 25°C inférieure à 8% en poids.

6. Film soufflé selon la revendication 1, le copolymère d'éthylène du constituant B) comprenant 35 à 45% en poids de propylène.

7. Film soufflé selon la revendication 1, le copolymère d'éthylène du constituant B) présentant une fraction soluble dans le xylène (XS_{B}) de 70 à 95% en poids.

8. Produits et emballages alimentaires comprenant le film soufflé selon la revendication 1.

9. Procédé de film soufflé, la composition de polyoléfine (I) selon la revendication 1 étant utilisée pour produire au moins une couche de film.

10. Procédé selon la revendication 9, mis en oeuvre dans les conditions suivantes :
- la longueur de la vis représente 20 à 40 fois le diamètre de la vis ;
- les températures du cylindre et de la filière sont de 160 à 240°C ;
- la fente annulaire de filière est égale ou inférieure à 3 mm ;
- le rapport de soufflage est de 2,2 à 4.
